# EUROPÄISCHE PATENTSCHRIFT

(11) **EP 2 241 488 B1**
(45) Veröffentlichungstag und Bekanntmachung des Hinweises auf die Patenterteilung: **14.03.2018**
(21) Anmeldenummer: 10160154.0
(22) Anmeldetag: 16.04.2010
(51) Int. Cl.: B60T 13/26, B60T 15/48, B60T 17/02

(54) **Druckluftversorgungssystem für ein Kraftfahrzeug**
Pressurised air supply system for a motor vehicle
Système d'alimentation en air comprimé pour un véhicule automobile

(30) Priorität: 17.04.2009 DE 102009017903
(43) Veröffentlichungstag der Anmeldung: 20.10.2010
(73) Patentinhaber: KNORR-BREMSE Systeme für Nutzfahrzeuge GmbH, 80809 München (DE)
(72) Erfinder: Voith, András, 1183 Budapest (HU); Tóth, János, 6000 Kecskemét (HU); Fazekas, Csaba, 1213 Budapest (HU); Muser, Michael, 85276 Pfaffenhofen (DE); Kántor, Kornél, 6000 Kecskemét (HU)
(74) Vertreter: Schönmann, Kurt

(56) Entgegenhaltungen:
- US-A- 6 074 462
- US-A1- 2004 260 441
- US-B1- 7 344 201

## Beschreibung

Die Erfindung betrifft eine Druckluftversorgungseinrichtung für ein Kraftfahrzeug mit einem Brennkraftmotor, mindestens einem Druckluftreservoir und einem Kompressor, der zur Zufuhr von Druckluft zu dem Druckluftreservoir verbunden oder verbindbar ist. Die Druckluftversorgungseinrichtung verfügt über eine Druckluftsteuereinrichtung, welche Zufuhr von Druckluft von dem Kompressor zu dem mindestens einen Druckluftreservoir zu steuern vermag.

Die Erfindung betrifft weiterhin ein Druckluftversorgungssystem, welche die Druckluftversorgungseinrichtung verwendet sowie ein Verfahren zum Steuern eines Druckluftversorgungssystems für ein Kraftfahrzeug.

In vielen modernen Kraftfahrzeugen finden pneumatische Systeme Verwendung, also Systeme, die Druckluft verwenden. Insbesondere werden bei Nutzfahrzeugen, wie z.B. Lastkraftwagen Druckluftbremssysteme eingesetzt, bei denen die Pedalkraft, die ein Fahrer beim Bremsen erzeugt, nicht über eine Hydraulik direkt an die Bremsen angelegt wird, sondern die durch Druckluft aufgebrachte Bremskraft steuert.

Ein solches Druckluftbremssystem ist auf einen ausreichenden Vorrat an Druckluft angewiesen, um zuverlässig eine Bremsleistung zu bieten. Die benötigte Druckluft wird von einem Druckluftversorgungssystem des Kraftfahrzeuges bereitgestellt. Ein solches Druckluftversorgungssystem kann auch zur Versorgung anderer Druckluft benötigender Komponenten eines Kraftfahrzeugs wie beispielsweise Hebevorrichtungen oder Reifendrucksteuervorrichtungen vorgesehen sein, sogar dann, wenn kein Druckluftbremssystem Verwendung findet.

Herkömmlich ist eine Druckluftversorgungseinrichtung eines Druckluftversorgungssystems für Kraftfahrzeuge mit einem von einem Brennkraftmotor des Fahrzeugs angetriebenen Kompressor verbunden, der einem Druckluftreservoir unter Druck stehende Luft zuführt. Eine Druckluftsteuereinrichtung steuert die Zufuhr von Druckluft nach Bedarf. Der Betrieb des Kompressors durch den Motor erfordert Energie, die letztlich von dem Kraftstoff des Fahrzeugs stammt. Der Kompressorbetrieb erhöht daher den Kraftstoffverbrauch des Fahrzeugs und somit auch die Betriebskosten. Aus ökonomischen wie auch aus ökologischen Gründen ist es aber wünschenswert, den Kraftstoffverbrauch eines Fahrzeugs zu verringern.

Die US 7,344,201 B1 zeigt eine elektronische Steuerung eines Kompressors für ein pneumatisches Bremssystem eines Fahrzeugs. Es wird vorgeschlagen, während einer Schubphase den Kompressor zum Erzeugen von Druckluft zu verwenden.

Die US 2004/0260441 A1 beschreibt ein Verfahren zum Steuern eines durch einen Fahrzeugmotor angetriebenen Kompressors. Es können mehrere Reservoirs vorgesehen sein, die jeweils unterschiedlichen Druckluftkreisen zugeordnet sind. Es wird vorgeschlagen, unterschiedliche Schwell- beziehungsweise Sollwerte für die Befüllung von Reservoirs in Abhängigkeit von einem Fahrzustand einzustellen und den Kompressor entsprechend anzusteuern. Während des Bremsens über die Motorbremse können die Druckluftreservoirs aufgefüllt werden.

Die US 6,074,462 beschreibt einen Lufttrockner mit einer Druckluftversorgungseinrichtung, die ein primäres Druckluftreservoir und ein sekundäres Druckluftreservoir umfasst. Dabei ist vorgesehen, dass das sekundäre Druckluftreservoir in einem gemeinsamen Modul mit einem Lufttrockner aufgenommen ist. Das primäre Druckluftreservoir und das sekundäre Druckluftreservoir sind derart zusammengeschaltet, dass sie den gleichen Druck aufweisen.

Der Erfindung liegt die Aufgabe zugrunde, eine Druckluftversorgungseinrichtung für ein Kraftfahrzeug bereitzustellen, das Verbrauchersystemen des Fahrzeugs zuverlässig Druckluft zur Verfügung stellt und dabei kraftstoffsparend betrieben werden kann.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die Erfindung sieht eine Druckluftversorgungseinrichtung für ein Kraftfahrzeug mit einem Brennkraftmotor vor, das mindestens ein Druckluftreservoir mit einem vorbestimmten Solldruck und einen Kompressor aufweist, der zur Zufuhr von Druckluft zu dem Druckluftreservoir verbunden oder verbindbar ist. Die Druckluftversorgungseinrichtung umfasst eine Druckluftsteuereinrichtung, welche Zufuhr von Druckluft von dem Kompressor zu dem mindestens einen Druckluftreservoir zu steuern vermag. Die Druckluftsteuereinrichtung ist ferner dazu eingerichtet, einen Betriebszustand Schubphase des Fahrzeugs zu erfassen. Bei einem solchen Betriebszustand ist ein angefordertes Motormoment kleiner als ein Schubmoment des Kraftfahrzeuges , oder anders gesagt, der Motor ist von der Kupplungsseite angetrieben. Erfindungsgemäß ist die Druckluftsteuereinrichtung dazu ausgelegt, dann, wenn sich die Druckluft im Druckluftreservoir bei einem Druck unterhalb des Solldrucks befindet, auf Erfassen des Betriebszustands Schubphase hin Zufuhr von Druckluft von dem Kompressor zu dem mindestens einen Druckluftreservoir zu steuern. Es ist also vorgesehen, dass die Druckluftsteuereinrichtung feststellt, ob eine Schubphase des Fahrzeugs vorliegt, also beispielsweise das Fahrzeug rollt oder die Motorbremse aktiviert ist, und daher ungenützte Energie des Motors zur Verfügung steht. Diese ungenützte Energie wird dazu verwendet, den Kompressor zu starten beziehungsweise zu betreiben, wenn ein bestimmter Solldruck im Druckluftreservoir unterschritten ist. Durch Ausnutzen der Schubphasen des Fahrzeugs zum Betreiben des Kompressors lässt sich so die Belastung des Motors durch den Kompressor während einer Normalfahrt verringern und folglich Kraftstoff einsparen. Dies schließt selbstverständlich nicht aus, dass der Kompressor eingesetzt wird, um das Druckluftreservoir zu befüllen, wenn keine Schubphase vorliegt und er durch den Motor angetrieben wird, etwa, um einen vorgeschriebenen Mindestdruck für eine Druckluftbremsanlage im Druckluftreservoir bereitzustellen.

Erfindungsgemäß kann es besonders zweckmäßig sein, wenn der Solldruck einem vorbestimmten Minimaldruck des Druckluftreservoirs entspricht. Insbesondere für den Fall, dass die Druckluftsteuereinrichtung für ein Druckluftbremssystem vorgesehen ist, lässt sich so ein sicherer Betrieb gewährleisten.

Es ist vorgesehen, dass ein Druckluftversorgungssystem ein Hilfsreservoir für Druckluft mit einem vorbestimmten Hilfssolldruck aufweist, das mit dem Druckluftreservoir und dem Kompressor verbunden oder verbindbar ist. Das Hilfsreservoir kann eine zusätzliche Druckluftquelle für Verbraucher des Fahrzeugs sein und beispielsweise dann eingesetzt werden, wenn das Druckluftreservoir einen niedrigen Druck aufweist oder gar beschädigt ist.

Die Druckluftsteuereinrichtung ist dazu eingerichtet, dann, wenn sich die Druckluft im Hilfsreservoir bei einem Druck unterhalb des Hilfssolldrucks befindet, Zufuhr von Druckluft von dem Kompressor zu dem mindestens einen Hilfsreservoir zu steuern. Damit kann das Hilfsreservoir ebenfalls die Schubphase ausnutzend kraftstoffsparend mit Druckluft befüllt werden. Ferner ist die Kapazität zur Druckluftspeicherung des Systems gegenüber einem System mit gleich großem Druckluftreservoir ohne Hilfsreservoir erhöht. Im Falle häufig auftretender Schubphasen, beispielsweise bei Bergabfahrten, lässt sich besonders viel Energie durch Speichern komprimierter Luft einsparen. Insbesondere kann vorgesehen sein, dass die Druckluft im Hilfsreservoir bei höherem Druck gespeichert ist als im Druckluftreservoir. Dadurch lässt sich die Druckluft im Hilfsreservoir bei einer höheren Energiedichte speichern als die Druckluft im Druckluftreservoir.

Die Druckluftsteuereinrichtung ist dazu ausgelegt, dann, wenn der Druck im Hilfsreservoir größer ist als der Druck im Druckluftreservoir, eine Zufuhr von Druckluft von dem Hilfsreservoir zu dem Druckluftreservoir zu steuern. So lässt sich der Druck im Druckluftreservoir schnell auf einen höheren Druck bringen, ohne dass der Kompressor angestellt werden muss. Ein solches Umfüllen von Druckluft vom Hilfsreservoir zum Druckluftreservoir verläuft in der Regel schneller als ein Befüllen durch den Kompressor. Außerdem wird eine Belastung des Motors durch den Kompressor vermieden, so dass während des Umfüllvorgangs die volle Motorleistung zur Verfügung steht. Es kann dabei zweckmäßig sein, die Druckluftsteuereinrichtung derart auszubilden, dass sie ein Strömen von Luft von dem Hilfsreservoir zu dem Druckluftreservoir nur dann zulässt, wenn der Druck im Druckluftreservoir unterhalb eines bestimmten Umfülldrucks liegt, der mit dem Solldruck des Druckluftreservoirs identisch sein kann. Dies vermeidet, dass ständig Luft vom Hilfsreservoir zum Druckluftreservoir strömt und verringert die Belastung von Leitungen und Ventilen. Ferner wird eine größere Reserve an Druckluft im Hilfsreservoir zurückbehalten, die dann bereitgestellt werden kann, wenn kurzfristig eine größere Menge an Druckluft im Druckluftreservoir benötigt wird.

Die vorliegende Erfindung umfasst außerdem ein Druckluftversorgungssystem, das eine der oben beschriebenen Druckluftversorgungseinrichtungen umfasst.

Ferner umfasst die vorliegende Erfindung ein Verfahren zum Steuern eines Druckluftversorgungssystems für ein Kraftfahrzeug mit den Schritten des Erfassens durch eine Druckluftsteuereinrichtung, ob ein Betriebszustand Schubphase eines Fahrzeugs vorliegt, und des Erfassens durch die Druckluftsteuereinrichtung, ob ein Druck in einem Druckluftreservoir unterhalb eines vorbestimmten Solldrucks liegt. Außerdem umfasst das Verfahren den Schritt des Steuerns einer Zufuhr von Druckluft von einem Kompressor zu dem Druckluftreservoir durch die Druckluftsteuereinrichtung, wenn ein Betriebszustand Schubphase erfasst wurde und ein unterhalb des Solldrucks liegender Druck in dem Druckluftreservoir erfasst wurde.

Es sind außerdem vorgesehen die Schritte des Erfassens durch die Druckluftsteuereinrichtung, ob ein Druck in einem Hilfsreservoir unterhalb eines vorbestimmten Hilfssolldrucks liegt, und des Steuerns einer Zufuhr von Druckluft von dem Kompressor zu dem Hilfsreservoir durch die Druckluftsteuereinrichtung, wenn ein Betriebszustand Schubphase erfasst wurde und ein unterhalb des Hilfssolldrucks liegender Druck in dem Hilfsreservoir erfasst wurde. Ein Befüllen des Hilfsreservoirs kann selbstverständlich auch erfolgen, wenn keine Schubphase vorliegt. Dadurch lässt sich erreichen, dass ein Mindestdruck im Hilfsreservoir unabhängig vom Auftreten von Schubphasen zuverlässig bereitgestellt werden kann.

Aus einem Hilfsreservoir lässt sich jederzeit Druckluft für das Druckluftreservoir bereitstellen, wenn der Druck im Hilfsreservoir über dem Druck im Druckluftreservoir liegt. Somit kann nötigenfalls ein schnelleres Befüllen des Druckluftreservoirs erfolgen, als es der Kompressor ermöglicht. Dieses Befüllen kann unabhängig von der Fahrsituation durchgeführt werden, insbesondere unabhängig davon, ob eine Schubphase vorliegt oder nicht.

Ferner ist dabei vorgesehen, den Schritt des
Steuerns einer Zufuhr von Druckluft von dem Hilfsreservoir zu dem Druckluftreservoir durch die Druckluftsteuereinrichtung durchzuführen, wenn der Druck im Hilfsreservoir größer ist als der Druck im Druckreservoir. Es ist vorteilhaft, ein Strömen von Luft von dem Hilfsreservoir zu dem Druckluftreservoir nur dann zuzulassen, wenn der Druck im Druckluftreservoir unterhalb eines bestimmten Umfülldrucks liegt.

Die Erfindung wird nun mit Bezug auf die begleitenden Zeichnungen anhand bevorzugter Ausführungsformen beispielhaft erläutert.

Es zeigen:
- Figur 1: eine schematische Darstellung eines Druckluftversorgungssystems gemäß einer Ausführungsform der Erfindung;
- Figur 2: eine Blockdarstellung eines erfindungsgemäßen Verfahrens; und
- Figur 3: eine Blockdarstellung einer besonders bevorzugten Ausführungsform des erfindungsgemäßen Verfahrens.

Bei der nachfolgenden Beschreibung bezeichnen gleiche Bezugszeichen gleiche oder vergleichbare Komponenten.

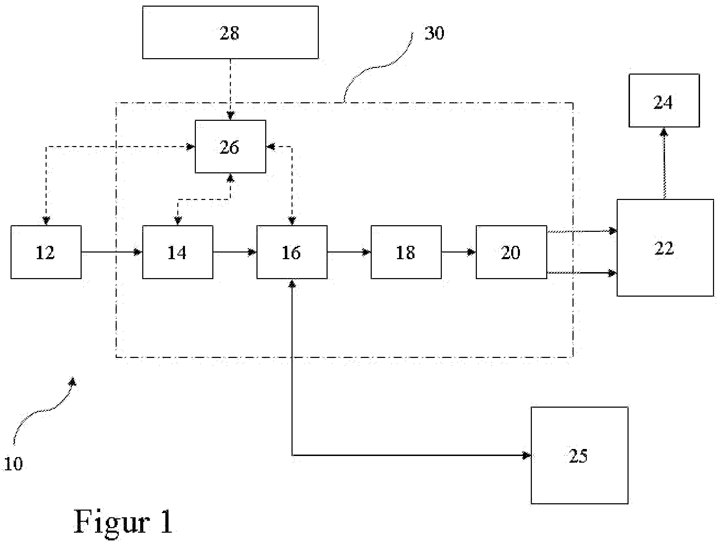

In der Figur 1 stellen durchgezogene Verbindungslinien zum Führen von Druckluft geeignete Leitungen dar. Gestrichelte Linien stellen Steuerverbindungen dar. Die genannten Leitungen und Verbindungen sind, sofern nichts anderes explizit erwähnt ist, auf die übliche Weise angeschlossen und gegebenenfalls mit geeigneten üblichen Steuereinrichtungen bzw. Ventilen versehen.

Ein Druckluftversorgungssystem 10 für ein Kraftfahrzeug weist einen Kompressor 12 auf. Der Kompressor 12 kann durch einen nicht gezeigten Motor des Fahrzeugs betrieben werden und stellt Druckluft bereit. Mit dem Kompressor verbunden ist eine Luftvorbereitungseinheit 14, die insbesondere zum Filtern und Trocknen der Luft geeignet ist.
Luft kann von dem Kompressor 12 zur Luftvorbereitungseinheit 14 strömen, wo ihr Wasser und Verunreinigungen entzogen werden.

Die Luftvorbereitungseinheit 14 ist ferner mit einer Betriebseinheit 16 verbunden, die eine Ventilvorrichtung umfassen kann. Stromab der Betriebseinheit 16 kann optional ein Druckregulator 18 vorgesehen sein, der dazu geeignet ist, den Druck aus der Betriebseinheit 16 auf ein gewünschtes Maß einzustellen.

Ebenfalls optional kann sich hinter dem Druckregulator 18 ein Druckluftverteiler 20 befinden, der zum Verteilen von Luft auf ein Druckluftreservoir 22 vorgesehen ist. Der Druckluftverteiler 20 kann beispielsweise als ein Mehrkreisschutzventil ausgeführt sein.

Das Druckluftreservoir 22 kann mehrere voneinander getrennte Kammern aufweisen, oder nur eine einzige Kammer. Sind mehrere Kammern vorgesehen, können diese auch räumlich voneinander getrennt über das Fahrzeug verteilt sein. Der Druckluftverteiler 20 verfügt über geeignete Leitungsverbindungen zu dem Druckluftreservoir 22, um dieses zu Befüllen. Im gezeigten Beispiel sind zwei Leitungsverbindungen vom Druckluftverteiler 20 zu dem Druckluftreservoir 22 vorgesehen.

Alternativ kann die Betriebseinheit 16 auch direkt mit dem Druckluftreservoir 22 verbunden sein beziehungsweise können dem Druckregulator 18 und/oder dem Druckluftverteiler 20 entsprechende Komponenten Teil der Betriebseinheit 16 sein.

Das Druckluftreservoir 22 ist mit einem oder mehreren Druckluftverbrauchern 24 derart verbunden, dass es den Verbrauchern 24 Druckluft bereitstellen kann. Sind mehrere Verbraucher 24 an das Druckluftreservoir 22 gekoppelt, so sind diese beispielsweise jeweils mit verschiedenen Kammern des Druckluftreservoirs verbunden. In dem Fall, dass das Kraftfahrzeug mit einem pneumatischen Bremssystem ausgestattet ist, stellt dieses einen äußerst wichtigen, weil sicherheitsrelevanten Verbraucher 24 dar.

In diesem Beispiel ist ein Hilfsreservoir 25 für Druckluft vorgesehen, das mit der Betriebseinheit 16 verbunden ist. Auch dieses Reservoir 25 kann wie oben beschrieben über mehrere Kammern verfügen.

Ferner verfügt das Druckluftversorgungssystem 10 über eine Druckluftsteuereinrichtung 26. Diese kann beispielsweise einen Mikroprozessor oder andere beziehungsweise weitere elektronische Komponenten aufweisen und ist zum Empfangen von Signalen mit einer Fahrzeugelektronik 28 verbunden. Diese Verbindung kann beispielsweise über einen CAN-Bus, einen LIN-Bus oder einen FlexRay-Bus erfolgen. Wichtig ist, dass die Druckluftsteuereinrichtung 26 in die Lage versetzt ist, ein entsprechendes Signal zu empfangen, wenn sich das Fahrzeug in einem Betriebszustand Schubphase befindet. Dabei ist auch vorstellbar, dass die Druckluftsteuereinrichtung 26 statt mit einer herkömmlichen Fahrzeugelektronik mit Sensoren verbunden ist, die einen solchen Zustand zu erfassen vermögen, beispielsweise durch Überwachung des Motormoments, und ein geeignetes Signal an die Druckluftsteuereinrichtung 26 übermitteln, wenn ein Betriebszustand Schubphase vorliegt. Selbstverständlich kann die Steuereinrichtung 26 auch für eine Zwei-Wege-Kommunikation mit der Fahrzeugelektronik 28 und/oder weiteren Komponenten ausgelegt sein, um beispielsweise Informationen über den Zustand des Druckluftversorgungssystems 10 an die Elektronik 28 weitergeben zu können. Als zur Steuereinrichtung 26 gehörig werden außerdem nicht ausdrücklich anderen Einheiten zugeordnete pneumatische Komponenten angesehen, die für bestimmte Steuerfunktion von Luftströmen notwendig sind, wie etwa bestimmte Ventile.

Die Steuereinrichtung 26 ist zur Ansteuerung des Kompressors 12 mit diesem verbunden. Insbesondere vermag es die Steuereinrichtung 26, den Kompressor zu starten oder anzuhalten. Auch die Luftvorbereitungseinheit 14 kann von der Steuereinrichtung 26 gesteuert werden, etwa um auf bekannte Art eine Regenerierung der Luftvorbereitungseinheit 14 durchzuführen, um diese von aus der Druckluft gefilterten Verunreinigungen und Feuchtigkeit zu befreien.

Die Betriebseinheit 16 ist ebenfalls mit der Steuereinrichtung 26 verbunden, so dass die Steuereinrichtung 26 einen Luftstrom durch die Betriebseinheit 16 zu steuern vermag. Insbesondere kann die Betriebseinheit 16 zum Beispiel mindestens ein durch die Steuereinrichtung 26 ansteuerbares Magnetventil aufweisen, das zum Verbinden des Kompressors 12 mit dem Druckluftreservoir 22 geöffnet werden kann. Wenn das Magnetventil geschlossen ist, ist die Verbindung zwischen dem Kompressor 12 und dem Druckluftreservoir 22 unterbrochen und dem Druckluftreservoir 22 kann keine Luft von dem Kompressor 12 zugeführt werden. Die Betriebseinheit 16 kann ferner Vorrichtungen zum Regulieren des Drucks der Druckluft aufweisen. Außerdem kann die Betriebseinheit 16 dazu eingerichtet sein, nach Maßgabe der Steuereinrichtung 26 einen Luftstrom vom Kompressor 12 zum Hilfsreservoir 25 zu steuern.

Über die Betriebseinheit 16 kann ferner eine Verbindung zum Strömen von Luft zwischen dem Hilfsreservoir 25 und dem Druckluftreservoir 22 gegeben sein. Alternativ kann eine direkte Verbindung zwischen dem Druckluftreservoir 22 und dem Hilfsreservoir 25 vorgesehen sein. Es ist zweckmäßig, in der Verbindung zwischen den Reservoiren 22 und 25 ein Rückschlagventil derart vorzusehen, dass ein Strömen von Luft vom Druckluftreservoir 22 zum Hilfsreservoir 25 verhindert ist. Diese Verbindung ist dazu vorgesehen, es zu ermöglichen, dass Druckluft vom Hilfsreservoir 25 zum Druckluftreservoir 22 strömt, wenn ein Druck Pₕ im Hilfsreservoir 25 über dem Druck Pᵣ im Druckluftreservoir 22 liegt. Es ist vorteilhaft, wenn die Steuereinrichtung 26 derart ausgestaltet ist, dass sie einen Luftstrom vom Reservoir 25 zum Druckluftreservoir 22 steuern kann und nur zulässt, wenn der Druck Pᵣ im Druckluftreservoir 22 unterhalb eines Umfülldrucks P_{U} liegt, welcher insbesondere ein Solldruck Pᵣₛ oder ein Maximalsolldruck Pᵣₘₐₓ sein kann. Ein Befüllen des Druckluftreservoirs 22 findet nur solange statt, bis dieses den Maximalsolldruck Pᵣₘₐₓ aufweist. Dazu kann zwischen dem Hilfsreservoir 25 und dem Druckluftreservoir 22 vorzugsweise ein Druckbegrenzungsventil vorgesehen sein, das dazu eingerichtet ist, zu verhindern, dass das Druckluftreservoir 22 von dem Hilfsreservoir 25 auf einen Druck über dem Maximalsolldruck Pᵣₘₐₓ befüllt wird.

In der gezeigten Variante ist die Betriebseinheit 16 also dazu ausgelegt, einen Luftstrom zwischen Kompressor 12, Druckluftreservoir 22 und Hilfsreservoir 25 nach Maßgabe der Steuereinrichtung 26 zu steuern.

Das System ist dazu ausgelegt, den Druck Pᵣ, Pₕ in den Reservoiren 22, 25 zu überwachen. Dies kann auf bekannte Art über Sensoren, beispielsweise Drucksensoren, zur Überwachung des Reservoirs 22 beziehungsweise Hilfsreservoirs 25 geschehen, die zur Signalübertragung an die Steuereinrichtung 26 vorgesehen sind. Alternativ können auch Sensoren vorgesehen sein, die mit der restlichen Fahrzeugelektronik 28 kommunizieren. Das System ist dann zweckmäßigerweise zum Weitergeben von den Druck betreffenden Informationen an die Steuereinrichtung 26 über die Verbindung der Fahrzeugelektronik 28 mit der Steuereinrichtung 26 ausgelegt.

Die Steuereinrichtung 26 und die Betriebseinheit 16 sowie optional die Luftvorbereitungseinheit 14, der Druckregulator 18 und/oder der Verteiler 20 können zusammen als eine Druckversorgungseinheit 30 angesehen werden. Es ist besonders vorteilhaft, eine solche Druckversorgungseinheit 30 so auszubilden, dass sie als ein Standardmodul zwischen einen Kompressor 12 und ein Druckluftreservoir 22 sowie, falls vorhanden, ein Hilfsreservoir 25 eingebaut werden kann.

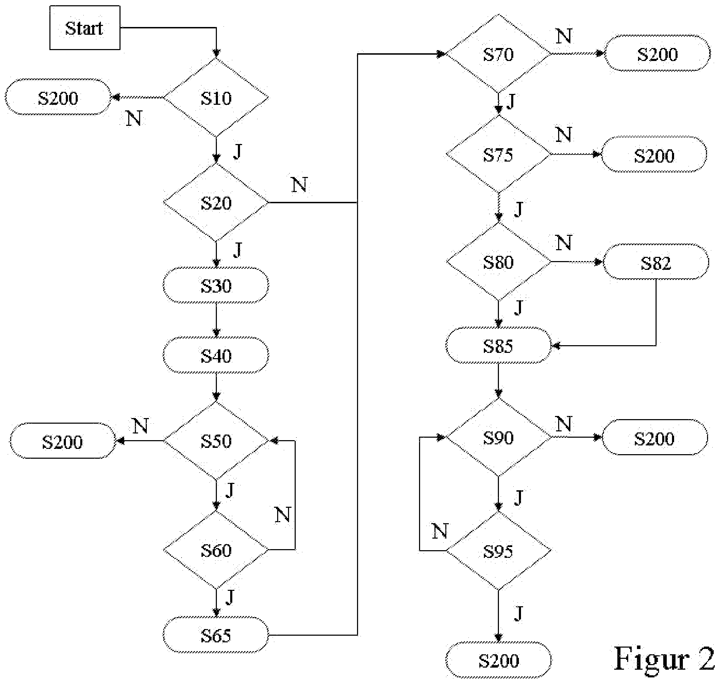

Im Folgenden werden mit Bezug auf Figur 2 die zum Betreiben des Druckluftversorgungssystems 10 durchgeführten Schritte beschrieben. Das beschriebene Verfahren kann parallel neben einem herkömmlichen Druckluftbetrieb betrieben werden. Insbesondere kann vorgesehen sein, dass ein paralleler Betrieb zur herkömmlichen Befüllung des Druckluftreservoirs 22 mit höherer Priorität durchgeführt wird, der beispielsweise sicherstellt, das immer ein sicherheitsrelevanter Mindestdruck im Druckluftversorgungssystem für eine Druckluftbremsanlage bereitsteht. Die Verfahrensschritte können auch in Serie mit Schritten eines herkömmlichen Druckluftbetriebs ausgeführt werden. Es ist vorteilhaft, die Steuereinrichtung 26 dazu auszulegen, neben dem hier beschriebenen Verfahren die herkömmliche Steuerung des Druckluftversorgungssystems 10 durchzuführen, sie kann aber auch separat beziehungsweise parallel zu einer Hauptsteuereinrichtung ausgebildet sein, die den herkömmlichen Betrieb des Druckluftversorgungssystems 10 steuert.

Die Steuereinrichtung 26 ist dazu ausgelegt, in Schritt S10 zu Erfassen, ob ein Betriebszustand Schubphase des Fahrzeugs vorliegt, beispielsweise indem sie ein bestimmtes Signal von der Fahrzeugelektronik 28 empfängt. Ist dies nicht der Fall, geht sie zu Schritt S200 über.

In Schritt S200 kann die Befüllung des Reservoirs beendet werden, indem der Kompressor 12 gestoppt wird und die Betriebseinheit 16 zum Abbruch der Verbindung zwischen Druckluftreservoir 22 und Kompressor 12 beziehungsweise gegebenenfalls zwischen Kompressor 12 und Hilfsreservoir 25 angesteuert wird. Insbesondere kann vorgesehen sein, weitere Bedingungen zu prüfen, ob eine Befüllung trotz Beendigung der Schubphase weitergeführt werden soll, etwa wenn der Druck im Reservoir 22 unterhalb eines weiteren definierten Minimalsolldrucks Pᵣₘᵢₙ liegt, der ein Befüllen mit Druckluft auch bei belastetem Motor notwendig macht. Ferner kann von Schritt S200 die Prozedur erneut begonnen werden. Auch kann hier in ein weiteres parallel durchgeführtes Verfahren zur Steuerung des Druckluftsystems verzweigt werden.

Liegt ein Betriebszustand Schubphase vor, erfasst die Steuereinrichtung 26 in Schritt S20, ob der Druck Pᵣ im Druckluftreservoir unterhalb eines bestimmten Solldrucks Pᵣₛ liegt. Der Solldruck Pᵣₛ kann insbesondere gleich dem Minimalsolldruck Pᵣₘᵢₙ gesetzt sein. Gilt Pᵣ < Pᵣₛ, verzweigt die Prozedur zu S30, ansonsten zu S70.

In Schritt S30 steuert die Steuereinrichtung 26 den Kompressor 12 derart an, dass er startet und Luft zu komprimieren beginnt. Außerdem wird die Betriebseinheit 16 in Schritt S40 derart gesteuert, dass Luft vom Kompressor 12 über die Luftvorbereitungseinheit 14 und die Betriebseinheit 16 sowie den Druckregulator 18 und den Verteiler 20 in das Druckluftreservoir 22 strömen kann. Die Schritte S30 und S40 lassen sich in beliebiger Reihenfolge ausführen. Es kann dabei vorteilhaft sein, zuerst den Kompressor 12 zu starten, da dieser in der Regel nicht sofort mit einer eingestellten Leistung wirkt.

In Schritt S50 wird überprüft, ob immer noch eine Schubphase vorliegt. Ist dies nicht der Fall, wird zu Schritt S200 übergegangen. Liegt weiterhin eine Schubphase vor, wird in Schritt S60 geprüft, ob der Maximalsolldruck Pᵣₘₐₓ erreicht ist, über den hinaus das Druckluftreservoir 22 nicht befüllt werden soll. Ist dies nicht der Fall, wird die Befüllung mit Druckluft fortgesetzt und wieder zu Schritt S50 verzweigt. Ist der Maximalsolldruck Pᵣₘₐₓ erreicht, wird in Schritt S65 die Verbindung zwischen Druckluftreservoir 22 und Kompressor 12 durch die Betriebseinheit 16 nach Maßgabe der Steuereinrichtung 26 unterbrochen.

Der optionale Schritt S70 überprüft, ob noch eine Schubphase vorliegt. Liegt eine Schubphase vor, wird zu Schritt S75 verzweigt. Ansonsten verzeigt das Verfahren zu Schritt S200.

In Schritt S75 erfasst die Steuereinrichtung 26, ob der Druck Pₕ im Hilfsreservoir 25 unterhalb eines bestimmten Hilfssolldrucks Pₕₛ liegt. Ist dies der Fall, überprüft die Steuereinrichtung 26 in Schritt S80, ob der Kompressor 12 läuft und startet ihn gegebenenfalls (Schritt S82, von dem es zu Schritt S85 weitergeht, nachdem der Kompressor gestartet wurde). Ansonsten wird von Schritt S80 direkt zu Schritt S85 verzweigt.

Ergibt die Überprüfung in Schritt S75, dass der Druck Pₕ im Hilfsreservoir 25 zumindest dem Hilfssolldruck Pₕₛ gleich ist oder darüber liegt, wird zu Schritt S200 verzeigt.

In Schritt S85, der auf Schritt S80 oder Schritt S82 folgt, wird die Betriebseinheit 16 dazu angesteuert, ein Befüllen des Hilfsreservoirs 25 zu ermöglichen.

Dann überprüft die Steuereinrichtung 26, ob immer noch eine Schubphase vorliegt (S90). Ist dies nicht der Fall, verzweigt die Prozedur zu Schritt S200. Ansonsten geht das Verfahren zu Schritt S95 über.

Schritt S95 überprüft, ob der Druck Pₕ im Hilfsreservoir 25 einen Maximalsolldruck Pₕₘₐₓ erreicht hat. Ist dies nicht der Fall, wird der Kompressor 12 weiter zum Befüllen des Hilfsreservoirs 25 betrieben und zu Schritt S90 verzweigt. Ist der Maximalsolldruck Pₕₘₐₓ erreicht, wird zu Schritt S200 übergegangen. Es kann zweckmässig sein, den Hilfssolldruck Pₕₛ und den Maximalsolldruck Pₕₘₐₓ so einzustellen, dass sie gleich sind. Dann wird das Hilfsdruckreservoir 25 befüllt, wenn sein Druck unter dem ihm zugeordneten Maximalsolldruck liegt.

Die Reihenfolge der Schritte in dieser Prozedur ist zweckmäßig gewählt, aber nicht notwendig. Insbesondere können die verschiedenen Überprüfungsschritte des Erfassens der Schubphase beziehungsweise eines Druck in der Reihenfolge vertauscht werden oder parallel zueinander durchgeführt werden. Auch ist es nicht notwendig, zuerst das Druckluftreservoir 22 zu befüllen, und dann das Hilfsreservoir 25. Auch die umgekehrte Reihenfolge ist vorstellbar. Alternativ können auch beide Reservoirs gleichzeitig aufgefüllt werden.

Die Solldrücke in den Reservoirs können nach Bedarf eingestellt sein. Es ist dabei vorteilhaft, wenn Pₕₘₐₓ > Pᵣₘₐₓ gilt, das Hilfsreservoir 25 also bis zu einem höheren Druck befüllt wird als das Druckluftreservoir 22. Dann lässt sich ein schnelles Befüllen des Druckluftreservoir 22 durch einen Luftstrom vom Hilfsreservoir 25 besonders leicht einrichten. Um ein möglichst konstantes Druckniveau Pᵣ im Druckluftreservoir 22 aufrecht zu erhalten, ist es zweckmäßig, den Umfülldruck Pᵤ=Pᵣₛ zu setzen, damit ein Druckabfall im Druckluftreservoir 22 auf einen Druck Pᵣ unterhalb des gewünschten Niveaus schnell durch das Hilfsreservoir ausgeglichen wird. Der Solldruck Pᵣₛ ist zweckmäßigerweise so gewählt, das eine zuverlässige Funktion des beziehungsweise der an das Druckluftreservoir 22 angeschlossenen Verbraucher 24 gewährleistet ist. Im einfachsten Fall gelten Pᵣₘᵢₙ=Pᵣₛ und Pₕₘₐₓ=Pₕₛ, d.h. die Sollwerte der Drücke, ab denen eine Zufuhr von Druckluft erfolgen soll, entsprechen für das Druckluftreservoir 22 dem Minimaldruck und für das Hilfsreservoir 5 dem Maximalsolldruck Pₕₘₐₓ. Es kann selbstverständlich zweckmässig sein, die Sollwerte anders einzustellen. Beispielsweise kann der Sollwert Pᵣₛ für das Druckluftreservoir 22 auf den Maximalsolldruck eingestellt sein; dann würde eine Druckluftzufuhr deutlich häufiger erfolgen als im vorgenannten Fall. Auch ist es möglich, die Sollwerte je nach Fahrsituation dynamisch einzustellen. So ist ein niedriger Druck Pᵣₛ im Druckluftreservoir 22 energetisch günstig und belastet das Druckluftversorgungssystem weniger als ein hoher Druck. Ist aber beispielsweise zu erwarten, dass eine hohe Bremsleistung oder eine langandauernde Bremsleistung verlangt wird (beispielsweise wenn durch Verwenden eines Navigationssystems der Fahrzeugelektronik bekannt ist, dass ein langes Gefälle bevorsteht), kann es insbesondere dann, wenn ein pneumatisches Bremssystem mit dem Druckluftversorgungssystem verbunden ist, zweckmässig sein, den Sollwert des Druckes Pᵣₛ im Druckluftreservoir 22 und gegebenenfalls entsprechend den Hilfssolldruck Pₕₛ des Hilfsreservoir 25 zu erhöhen. Dies kann schon vor Erreichen des Gefälles geschehen.

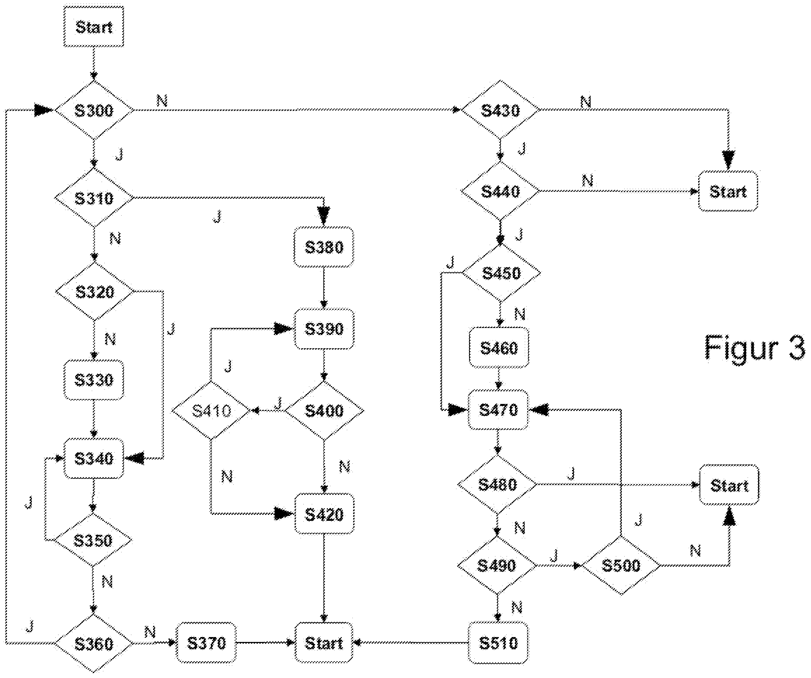

Figur 3 zeigt eine Variante des Verfahrens, bei der die Verfahrensschritte in Serie mit Schritten eines herkömmlichen Druckluftbetriebs durchgeführt werden. In dieser Variante ist der Solldruck Pᵣₛ des Druckluftreservoirs 22 mit dem Minimalsolldruck Pᵣₘᵢₙ gleichgesetzt, der Solldruck Pₕₛ des Hilfsreservoirs 25 entspricht dem Maximalhilfsdruck Pₕₘₐₓ. Auch in dieser Variante gilt, dass die Reihenfolge der Schritte nur beispielhaft ist und vertauscht werden kann. Es wird ferner in dieser Variante kein Umfülldruck Pᵤ festgelegt, das heißt, es kann vom Hilfsdruckreservoir 25 zum Druckluftreservoir 22 umgefüllt werden, wenn der Druck Pₕ im Hilfsdruckreservoir 25 größer ist als der Druck Pᵣ im Druckluftreservoir 22.

In Schritt S300 wird überprüft, ob der Druck Pᵣ im Druckluftreservoir 22 unter dem Mindestdruck Pᵣₘᵢₙ liegt. Ist dies nicht der Fall, verzeigt das Verfahren nach S430. Gilt jedoch Pᵣ<Pᵣₘᵢₙ (beziehungsweise Pᵣ<=Pᵣₘᵢₙ), wird in Schritt S310 geprüft, ob der Druck Pᵣ im Druckluftreservoir 22 unter dem Druck Pₕ im Hilfsreservoir 25 liegt.

Ist dies nicht der Fall, wird in Schritt S320 festgestellt, ob der Kompressor 12 in Betrieb ist, und in Schritt S330 wird der Kompressor 12 gestartet, falls er laut dem Ergebnis aus Schritt S320 noch nicht läuft.
Ansonsten wird von Schritt S320 direkt zu Schritt S340 verzweigt.

In Schritt S340 wird das Druckluftreservoir 22 vom Kompressor 12 mit Druckluft befüllt. Nachfolgend wird in Schritt S350 festgestellt, ob der Druck Pᵣ im Druckluftreservoir 22 geringer ist als der Maximaldruck Pᵣₘₐₓ. Ist dies der Fall, wird zu Schritt S340 zurückverzweigt.

Ist der Druck Pᵣ jedoch schon auf den Druck Pᵣₘₐₓ angestiegen, geht es zu Schritt S360, in dem überprüft wird, ob eine Schubphase vorliegt. Falls nein, wird in Schritt S370 der Kompressor 12 abgeschaltet und das Verfahren kehrt zum Anfang zurück. Ansonsten wird zu S300 zurückverzweigt.

Wird in Schritt S310 festgestellt, dass der Druck Pᵣ im Druckluftreservoir 22 unter dem Druck Pₕ im Hilfsreservoir 25 liegt, wird in Schritt S380 die Zufuhr vom Hilfsreservoir 25 zum Druckluftreservoir 22 geöffnet und in Schritt S390 wird nachfolgend das Druckluftreservoir 22 vom Hilfsreservoir 25 mit Druckluft befüllt.

In Schritt S400 wird überprüft, ob der Druck im Druckluftreservoir 22 noch unterhalb des Maximalsolldrucks Pᵣₘₐₓ liegt. Ist dies so, wird in Schritt S410 festgestellt, ob der Druck Pₕ im Hilfsreservoir 25 größer ist als der Druck Pᵣ im Druckluftreservoir 22. Falls ja, verzweigt das Verfahren zurück zu Schritt S390, um das Druckluftreservoir 22 weiter mit Druckluft aus dem Hilfsreservoir 25 zu befüllen. Reicht der Druck Pₕ im Hilfsreservoir 25 nicht mehr aus, wird in Schritt S420 die Verbindung vom Hilfsreservoir 25 zum Druckluftreservoir 22 unterbrochen und die Luftzufuhr geschlossen. Ergibt sich in Schritt S400 jedoch, der Druck Pᵣ im Druckluftreservoir 22 schon beim Maximalsolldruck Pᵣₘₐₓ liegt, verzweigt das Verfahren von Schritt S400 direkt zu Schritt S420. Danach wird zum Anfang des Verfahrens zurückverzweigt.

Dieser Zweig des Verfahrens stellt sicher, dass das Druckluftreservoir 22 auf jeden Fall auf den Mindestdruck Pᵣₘᵢₙ gebracht wird, indem entweder das Hilfsdruckreservoir 25 zum Auffüllen des Druckluftreservoirs 22 verwendet wird, oder der Kompressor 12.

Ergibt die Überprüfung in Schritt S300 hingegen, dass der Druck Pᵣ im Druckluftreservoir 22 ausreichend hoch ist, er also größer ist als der Minimaldruck Pᵣₘᵢₙ, verzeigt das Verfahren zu Schritt S430. In Schritt S430 wird überprüft, ob eine Schubphase vorliegt. Wenn dies nicht der Fall ist, wird zum Anfang des Verfahrens zurückverzweigt.
Liegt hingegen eine Schubphase vor, wird in Schritt S440 festgestellt, ob ferner der Druck Pₕ im Hilfsreservoir 25 unter dem Hilfssolldruck Pₕₛ liegt. Ist dies nicht der Fall, wird ebenfalls zum Anfang des Verfahrens zurückverzweigt. Ansonsten wird analog zu den Schritten S320 bis S340 überprüft, ob der Kompressor 12 läuft (Schritt S450), der Kompressor 12 gestartet, wenn dies nicht der Fall ist (Schritt S460), und das Hilfsreservoir 25 mit Hilfe des Kompressors 12 aufgefüllt (Schritt S470). Dabei wird der Kompressor 12 in diesem Zweig des Verfahrens unter Ausnutzung der Schubphase betrieben; in dieser Ausführungsform ist nicht vorgesehen, das Hilfsreservoir 25 aufzufüllen, wenn keine Schubphase vorliegt. Selbstverständlich kann aber vorgesehen sein, dass Hilfsreservoir 25 auch dann aufzufüllen, wenn keine Schubphase vorliegt und die Motorleistung dazu verwendet werden muss, etwa dann, wenn es über einen bestimmten längeren Zeitraum einen Druck unterhalb des Solldrucks Pₕₛ aufweist.

Schritt S480 ist dazu vorgesehen, festzustellen, ob der Druck im Druckluftreservoir 22 unter dem Minimalsolldruck Pᵣₘᵢₙ liegt. Ist dies der Fall, geht das Verfahren zum Anfang über und das Druckreservoir 22 kann befüllt werden. Falls nicht, wird in Schritt S490 festgestellt, ob der Druck Pₕ unterhalb des Hilfssolldrucks Pₕₛ liegt. Ist dies der Fall, wird in Schritt S500 geprüft, ob immer noch eine Schubphase vorliegt. Hat sich die Fahrzeugsituation dahingehend geändert, dass keine Schubphase mehr vorliegt, verzweigt das Verfahren wieder zum Anfang. Befindet sich das Fahrzeug hingegen in einer Schubphase, wird zu Schritt S470 zurückverzweigt und das Hilfsreservoir 25 wird weiter befüllt.

Ergibt Schritt S490, dass der Druck Pₕ im Hilfsreservoir 25 den Solldruck Pₕₛ erreicht hat, so wird in Schritt S510 der Kompressor 12 abgeschaltet und das Verfahren beginnt erneut.

Auch für das eben beschriebene Verfahren gelten die weiter oben gemachten Bemerkungen bezülich der Werte der Solldrucke. In den einzelnen Schritten, in denen der Druck in den Reservoirs überprüft wird, muss bei Verwendung eines anderen Wertes für den Solldruck Pᵣₛ als Pᵣₘᵢₙ gegebenenfalls Pᵣₘᵢₙ durch Pᵣₛ ersetzt werden.

Die hier beschriebene Vorrichtung und insbesondere die beschrieben Verfahren können durch Ausnutzen der Schubphasen von Fahrzeugen zum Betreiben des Kompressors Kraftstoff einsparen. Insbesondere bei Fahrzeugen mit Druckluftbremssystemen wird ein Befüllen des Druckluftreservoir bei einem Normalbetrieb des Motors allerdings nicht vollständig ersetzbar sein, um immer ausreichend Druckluft zum Bremsen zur Verfügung zu haben. Die erfindungsgemäßen Vorrichtungen und Verfahren schließen daher das Verwenden eines herkömmlichen Systems nicht aus, sondern können zusätzlich zu einem solchen verwendet werden.

Auf jeden Fall müssen die für den Betrieb verlangten Sicherheitserfordernisse erfüllt sein, etwa was den Druck im Druckluftreservoir für ein Druckluftbremssystem angeht. Dieser sollte den erforderlichen Mindestdruck nicht unterschreiten. Dabei versteht es sich von selbst, dass unabhängig vom Betriebszustand jederzeit der Kompressor des Druckluftsystems eingesetzt werden kann, um den erforderlichen Druck im Druckluftreservoir herzustellen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Druckluftversorgungssystem
- 12: Kompressor
- 14: Luftvorbereitungseinheit
- 16: Betriebseinheit
- 18: Druckregulator
- 20: Druckluftverteiler
- 22: Druckluftreservoir
- 24: Druckluftverbraucher
- 25: Hilfsreservoir
- 26: Druckluftteuereinrichtung
- 28: Fahrzeugelektronik
- 30: Druckluftversorgungseinrichtung

## Patentansprüche

1. Druckluftversorgungseinrichtung (30) für ein Kraftfahrzeug mit einem Brennkraftmotor, mindestens einem Druckluftreservoir (22, 25) mit einem vorbestimmten Solldruck (Pᵣₛ,Pₕₛ) und einem Kompressor (12), der zur Zufuhr von Druckluft zu dem Druckluftreservoir (22, 25) verbunden oder verbindbar ist;
wobei die Druckluftversorgungseinrichtung (10) eine Druckluftsteuereinrichtung (26) aufweist, welche eine Zufuhr von Druckluft von dem Kompressor (12) zu dem mindestens einen Druckluftreservoir (22, 25) zu steuern vermag, und die ferner dazu eingerichtet ist, einen Betriebszustand Schubphase des Fahrzeugs zu erfassen;
wobei die Druckluftsteuereinrichtung (26) dazu eingerichtet ist, dann, wenn sich die Druckluft im Druckluftreservoir (22, 25) bei einem Druck (Pᵣ,Pₕ) unterhalb des Solldrucks (Pᵣₛ,Pₕₛ) befindet, auf Erfassen des Betriebszustands Schubphase hin Zufuhr von Druckluft von dem Kompressor (12) zu dem mindestens einen Druckluftreservoir (22, 25) zu steuern; **dadurch gekennzeichnet, dass** die Druckluftsteuereinrichtung (26) dazu eingerichtet ist, dann, wenn sich Druckluft in einem mit dem Kompressor (12) verbundenen oder verbindbaren Hilfsreservoir (25) bei einem Druck (Pₕ) unterhalb eines Hilfssolldrucks (Pₕₛ) befindet, Zufuhr von Druckluft von dem Kompressor (12) zu dem Hilfsreservoir (25) zu steuern; und wobei die Druckluftsteuereinrichtung (26) ferner dazu eingerichtet ist, dann, wenn der Druck (Pₕ) im Hilfsreservoir (25) größer ist als der Druck (Pᵣ) im Druckluftreservoir (22), eine Zufuhr von Druckluft von dem Hilfsreservoir (25) zu dem Druckluftreservoir (22) zu steuern.

2. Druckluftversorgungssystem (10) für ein Kraftfahrzeug mit einem Brennkraftmotor, umfassend:
- mindestens ein Druckluftreservoir (22, 25) mit einem vorbestimmten Solldruck (Pᵣₛ,Pₕₛ);
- einen Kompressor (12), der zur Zufuhr von Druckluft zu dem Druckluftreservoir (22, 25) verbunden oder verbindbar ist;
- eine Druckluftversorgungseinrichtung (30) mit einer Druckluftsteuereinrichtung (26), welche Zufuhr von Druckluft von dem Kompressor (12) zu dem mindestens einen Druckluftreservoir (22, 25) zu steuern vermag, und die ferner dazu eingerichtet ist, einen Betriebszustand Schubphase des Fahrzeugs zu erfassen;
wobei die Druckluftsteuereinrichtung (26) dazu eingerichtet ist, dann, wenn sich die Druckluft im Druckluftreservoir (22, 25) bei einem Druck (Pᵣ,Pₕ) unterhalb des Solldrucks (Pᵣₛ,Pₕₛ) befindet, auf Erfassen des Betriebszustands Schubphase hin Zufuhr von Druckluft von dem Kompressor (12) zu dem mindestens einen Druckluftreservoir (22, 25) zu steuern; wobei das Druckluftversorgungssystem ferner mindestens ein Hilfsreservoir (25) für Druckluft mit einem vorbestimmten Hilfssolldruck (Pₕₛ) aufweist, das mit dem Druckluftreservoir (22) und dem Kompressor (12) verbunden oder verbindbar ist; **dadurch gekennzeichnet, dass** die Druckluftsteuereinrichtung (26) ferner dazu eingerichtet ist, dann, wenn sich die Druckluft im Hilfsreservoir (25) bei einem Druck (Pₕ) unterhalb des Hilfssolldrucks (Pₕₛ) befindet, Zufuhr von Druckluft von dem Kompressor (12) zu dem mindestens einen Hilfsreservoir (25) zu steuern;
und wobei die Druckluftsteuereinrichtung (26) ferner dazu eingerichtet ist, dann, wenn der Druck (Pₕ) im Hilfsreservoir (25) größer ist als der Druck (Pᵣ) im Druckluftreservoir (22), eine Zufuhr von Druckluft von dem Hilfsreservoir (25) zu dem Druckluftreservoir (22) zu steuern.

3. Verfahren zum Steuern eines Druckluftversorgungssystems (10) für ein Kraftfahrzeug, umfassend die Schritte
- Erfassen (S10), durch eine Druckluftsteuereinrichtung (26), ob ein Betriebszustand Schubphase eines Fahrzeugs vorliegt;
- Erfassen (S20, S75), durch die Druckluftsteuereinrichtung (26), ob ein Druck (Pᵣ,Pₕ) in einem Druckluftreservoir (22) unterhalb eines vorbestimmten Solldrucks (Pᵣₛ,Pₕₛ) liegt; und
- Steuern, durch die Druckluftsteuereinrichtung (26), einer Zufuhr von Druckluft von einem Kompressor (12) zu dem Druckluftreservoir (22, 25), wenn ein Betriebszustand Schubphase erfasst wurde und ein unterhalb des Solldrucks (Pᵣₛ,Pₕₛ) liegender Druck (Pᵣ,Pₕ) in dem Druckluftreservoir (22, 25) erfasst wurde;
- Erfassen (S75), durch die Druckluftsteuereinrichtung (26), ob ein Druck (Pₕ) in einem Hilfsreservoir (25) unterhalb eines vorbestimmten Hilfssolldrucks (Pₕₛ) liegt; und
- Steuern (S80), durch die Druckluftsteuereinrichtung (26), einer Zufuhr von Druckluft von dem Kompressor (12) zu dem Hilfsreservoir (25), wenn ein Betriebszustand Schubphase erfasst wurde und ein unterhalb des Hilfssolldrucks (Pₕₛ) liegender Druck (Pₕ) in dem Hilfsreservoir (25) erfasst wurde;
- Steuern, durch die Steuereinrichtung (26), einer Zufuhr von Druckluft von dem Hilfsreservoir (25) zu dem Druckluftreservoir (22), wenn der Druck (Pₕ) im Hilfsreservoir (25) größer ist als der Druck (Pᵣ) im Druckreservoir (22).

## Claims

1. A compressed air supply device (30) for a motor vehicle comprising an internal combustion engine, at least one compressed air tank (22, 25) having a predetermined reference pressure (Pᵣₛ, Pₕₛ) and a compressor (12), which is or can be connected to the compressed air tank (22, 25) for the supply of compressed air; wherein the compressed air supply device (10) comprises a compressed air control device (26) which is able to control a supply of compressed air from the compressor (12) to the at least one compressed air tank (22, 25) and is, furthermore, configured to detect a coasting operating state of the vehicle; wherein the compressed air control device (26) is configured to control a supply of compressed air from the compressor (12) to the at least one compressed air tank (22, 25) when the air pressure in the compressed air tank (22, 25) is at a pressure (Pᵣ, Pₕ) below the reference pressure (Pᵣₛ, Pₕₛ) in order to detect the coasting operating state; **characterised in that** the compressed air control device (26) is configured to control the supply of compressed air from the compressor (12) to the auxiliary tank (25) when compressed air in an auxiliary tank (25) that is or can be connected to the compressor (12) is at a pressure (Pₕ) below an auxiliary reference pressure (Pₕₛ); and wherein the compressed air control device (26) is, in addition, configured to control a supply of compressed air from the auxiliary tank (25) to the compressed air tank (22) when the pressure (Pₕ) in the auxiliary tank (25) is greater than the pressure (Pᵣ) in the compress air tank (22).

2. A compressed air supply system (10) for a motor vehicle having an internal combustion engine and comprising:
- at least one compressed air tank (22, 25) having a predetermined reference pressure (Pᵣₛ, Pₕₛ);
- a compressor (12) that is or can be connected to the supply of compressed air to the compressed air tank (22, 25);
- a compressed air supply device (30) having a compressed air control device (26) which is able to control a supply of compressed air from the compressor (12) to the at least one compressed air tank (22, 25) and is, in addition, configured to detect a coasting operating state of the vehicle;
wherein the compressed air control device (26) is configured to control a supply of compressed air from the compressor (12) to the at least one compressed air tank (22, 25) when the compressed air in the compressed air tank (22, 25) is at a pressure (Pᵣ, Pₕ) below the reference pressure (Pᵣₛ, Pₕₛ) in order to detect the coasting operating state; wherein, in addition, the compressed air supply system comprises at least one auxiliary tank (25) for compressed air with a predetermined auxiliary reference pressure (Pₕₛ) that is or can be connected to the compressed air tank (22) and the compressor (12); **characterised in that** the compressed air control device (26) is, in addition, configured to control a supply of compressed air from the compressor (12) to the at least one auxiliary tank (25) when the compressed air in the auxiliary tank (25) is at a pressure (Pₕ) under the auxiliary reference pressure (Pₕₛ); wherein the compressed air control device (26) is, in addition, configured to control a supply of compressed air from the auxiliary tank (25) to the compressed air tank (22) when the pressure (Pₕ) in the auxiliary tank is greater than the pressure (Pᵣ) in the compressed air tank (22).

3. A process for controlling a compressed air supply system (10) for a motor vehicle comprising the following steps:
- detection (S10), by a compressed air control device (26), of whether a vehicle is in a coasting operating state;
- detection (S20, S75), by the compressed air control device (26), of whether a pressure (Pᵣ, Pₕ) in a compressed air tank (22) is below a predetermined reference pressure (Pᵣₛ, Pₕₛ) ; and
- control, by the compressed air control device (26), of a supply of compressed air from a compressor (12) to the compressed air tank (22, 25) when a coasting operating state has been detected and a pressure (Pᵣ, Pₕ) below the reference pressure (Pᵣₛ, Pₕₛ) has been detected in the pressure tank (22, 25);
- detection (S75), by the compressed air control device (26), of whether a pressure (Pₕ) in an auxiliary tank (25) is below a predetermined auxiliary reference pressure (Pₕₛ); and
- control (S80), by the compressed air control device (26), of a supply of compressed air from the compressor (12) to the auxiliary tank (25) when a coasting operating state has been detected and a pressure (Pₕ) in the auxiliary tank (25) below the auxiliary reference pressure (Pₕₛ) has been detected;
- control, by the control device (26), of a supply of compressed air from the auxiliary tank (25) to the compressed air tank (22) when the pressure (Pₕ) in the auxiliary tank (25) is greater than the pressure (Pᵣ) in the pressure tank (22).

## Revendications

1. Dispositif (30) d'alimentation en air comprimé pour un véhicule ayant un moteur à combustion interne, au moins un réservoir (22, 25) d'air comprimé à une pression (Pᵣₛ₁ Pₕₛ) déterminée à l'avance et un compresseur (12), qui est relié au réservoir (22, 25) d'air comprimé pour l'envoi d'air comprimé ou qui peut l'être ;
dans lequel le dispositif (10) d'alimentation en air comprimé a un dispositif (26) de commande de l'air comprimé, qui peut commander un envoi d'air comprimé du compresseur (12) au au moins un réservoir (22, 25) d'air comprimé et qui est conçu en outre pour détecter un état de fonctionnement phase en roulement sur la lancée du véhicule ;
dans lequel le dispositif (26) de commande de l'air comprimé est conçu pour, lorsque l'air comprimé dans le réservoir (22, 25) d'air comprimé se trouve à une pression (Pᵣ₁, Pₕ) inférieure à la pression (Pᵣₛ₁ Pₕₛ) de consigne, commander, à la détection de l'état de fonctionnement en roulement sur la lancée, un envoi d'air comprimé du compresseur (12) au au moins un réservoir (22, 25) d'air comprimé ;
**caractérisé en ce que**
le dispositif (26) de commande d'air comprimé est conçu pour, lorsque de l'air comprimé, dans un réservoir (25) auxiliaire relié au compresseur (12) ou pouvant l'être se trouve à une pression (Pₕ) en dessous d'une pression (Pₕₛ) de consigne auxiliaire, commander l'envoi d'air comprimé du compresseur (12) au réservoir (25) auxiliaire et dans lequel le dispositif (26) de commande de l'air comprimé est conçu en outre pour, lorsque la pression (Pₕ) dans le réservoir (25) auxiliaire est plus grande que la pression (Pᵣ) dans le réservoir (22) d'air comprimé, commander un envoi d'air comprimé du réservoir (25) auxiliaire au réservoir (22) d'air comprimé.

2. Système (10) d'alimentation en air comprimé d'un véhicule automobile ayant un moteur à combustion interne, comprenant :
- au moins un réservoir (22, 25) d'air comprimé ayant une pression (Pᵣₛ₁Pₕₛ) déterminée à l'avance ;
- un compresseur (12), qui, pour envoyer de l'air comprimé, est relié au réservoir (22, 25) d'air comprimé ou peut l'être ;
- un dispositif (30) d'alimentation en air comprimé, comprenant un dispositif (26) de commande de l'air comprimé, qui peut commander l'envoi d'air comprimé du compresseur (12) au au moins un réservoir (22, 25) d'air comprimé, et qui est conçu en outre pour détecter un état de fonctionnement en roulement sur la lancée du véhicule ;
dans lequel le dispositif (26) de commande de l'air comprimé est conçu pour, lorsque la pression de l'air dans le réservoir (22, 25) d'air comprimé se trouve à une pression (Pᵣ₁Pₕ) en dessous de la pression (Pᵣₛ₁Pₕₛ) de consigne à la détection de l'état de fonctionnement en roulement sur la lancée, commander l'envoi d'air comprimé du compresseur (12) au au moins un réservoir (22, 25) d'air comprimé, le système d'alimentation en air comprimé ayant en outre au moins un réservoir (25) auxiliaire d'air comprimé ayant une pression (Pₕₛ) de consigne auxiliaire déterminée à l'avance, qui est relié au réservoir (22) d'air comprimé et au compresseur (12) ou qui peut l'être ;
**caractérisé en ce que**
le dispositif (26) de commande de l'air comprimé est conçu pour, lorsque la pression de l'air dans le réservoir (25) auxiliaire se trouve à une pression (Pₕ) en dessous de la pression (Pₕₛ) de consigne auxiliaire, commander l'envoi d'air comprimé du compresseur (12) au au moins un réservoir (25) auxiliaire ;
et dans lequel le dispositif (26) de commande de l'air comprimé est conçu en outre pour, lorsque la pression (Pₕ) dans le réservoir (25) auxiliaire est plus grande que la pression (Pᵣ) dans le réservoir (22) d'air comprimé, commander un envoi d'air comprimé du réservoir (25) auxiliaire au réservoir (22) d'air comprimé.

3. Procédé de commande d'un système (10) d'alimentation en air comprimé pour un véhicule automobile, comprenant les stades
- détection (S10), par un dispositif (26) de commande de l'air comprimé, s'il y a un état de fonctionnement en roulement sur la lancée d'un véhicule ;
- détection (S20, S75), par le dispositif (26) de commande de l'air comprimé, s'il y a une pression (Pᵣ₁Pₕ) dans un réservoir (22) d'air comprimé en dessous d'une pression (Pᵣₛ₁Pₕₛ) de consigne déterminée à l'avance et
- commande, par le dispositif (26) de commande de l'air comprimé, d'un envoi d'air comprimé d'un compresseur (12) au réservoir (22, 25) d'air comprimé, si un état de fonctionnement en roulement sur la lancée a été détecté et si une pression (Pᵣ₁Pₕ) en dessous de la pression (Pᵣₛ₁Pₕₛ) de consigne a été détectée dans le réservoir (22, 25) d'air comprimé ;
- détection (S75), par le dispositif (26) de commande de l'air comprimé, si une pression (Pₕ) dans un réservoir (25) auxilaire est en dessous d'une pression (Pₕₛ) de consigne auxiliaire déterminée à l'avance et
- commande (S80), par le dispositif (26) de commande de l'air comprimé, d'un envoi d'air comprimé du compresseur (12) au réservoir (25) auxiliaire, si un état de fonctionnement en roulement sur la lancée a été détecté et si une pression (Pₕ), se trouvant en dessous de la pression (Pₕₛ) de consigne auxiliaire, a été détectée dans le réservoir (25) auxiliaire ;
- commande, par le dispositif (26) de commande, d'un envoi d'air comprimé du réservoir (25) auxiliaire au réservoir (22) d'air comprimé, si la pression (Pₕ) dans le réservoir (25) auxiliaire est plus grande que la pression (Pᵣ) dans le réservoir (22) d'air comprimé.
